(19) Europäisches Patentamt
European Patent Office
Office européen des brevets

(11) EP 3 578 396 A1

(12) **EUROPEAN PATENT APPLICATION**
published in accordance with Art. 153(4) EPC

(43) Date of publication:
**11.12.2019 Bulletin 2019/50**

(51) Int Cl.:
**B60H 1/00** *(2006.01)* **B60H 1/32** *(2006.01)*
**B60K 1/04** *(2019.01)* **B60K 11/06** *(2006.01)*

(21) Application number: **17894735.4**

(22) Date of filing: **27.12.2017**

(86) International application number:
**PCT/JP2017/047108**

(87) International publication number:
**WO 2018/142826 (09.08.2018 Gazette 2018/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **02.02.2017 JP 2017017723**

(71) Applicant: **Denso Corporation**
**Kariya-shi, Aichi 448-8661 (JP)**

(72) Inventor: **KOBAYASHI, Ryo**
**Kariya-city**
**Aichi 448-8661 (JP)**

(74) Representative: **TBK**
**Bavariaring 4-6**
**80336 München (DE)**

(54) **VEHICLE AIR CONDITIONER**

(57) A vehicle air conditioner (1) includes an air-conditioning case (12) that defines therein an air path (13), an inside blower (18) that generates airflow toward an passenger compartment, and a communication duct (30) through which an inside of the air-conditioning case and a battery housing space (52a) communicate. A battery-cooling blower (56) that guides air flowing inside the air-conditioning case to the battery housing space via the communication duct is disposed in the battery housing space. The communication duct is connected to a portion of the air-conditioning case located upstream of the inside blower with respect to the airflow.

FIG. 1

**Description**

CROSS REFERENCE TO RELATED APPLICATION

This application is based on Japanese Patent Application No. 2017-17723 filed on February 2, 2017, the description of which is hereby incorporated by reference.

TECHNICAL FIELD

The present disclosure relates to a vehicle air conditioner for supplying air to an interior of a vehicle and a battery housing space.

BACKGROUND ART

A battery cooling device conventionally known cools a battery housed in a battery casing utilizing air flowing inside an air conditioner unit provided for air conditioning of an interior of a vehicle (e.g., see Patent Document 1).
Patent Document 1 discloses a technology which introduces cooling air into a battery casing with connection made between a communication duct communicating with an inside of the battery casing and an airflow downstream side of a blower, in a configuration where an evaporator and a heater core are disposed on an airflow downstream side of the blower. Patent Document 1 discloses an air-mixing type air conditioning unit which controls a mixing ratio of cold air cooled by the evaporator and warm air heated by the heater core to control the temperature of the air blown to the interior of the vehicle.

PRIOR ART DOCUMENT

PATENT DOCUMENT

Patent Document 1: JP 2008-222041 A

SUMMARY OF THE INVENTION

However, in case of the configuration which makes connection between the communication duct communicating with the inside of the battery casing and the airflow downstream side of the blower as disclosed in Patent Document 1, an air volume blown into the interior of the vehicle decreases during cooling of the battery. This condition may deteriorate comfort of an occupant of the vehicle during air conditioning, and therefore is considered undesirable.
Moreover, in case of the air-mixing type air-conditioning unit, for example, the mixing ratio of cold air to warm air during cooling of the battery changes when cold air cooled by the evaporator is introduced to the battery. The temperature of air blown to the interior of the vehicle is therefore difficult to appropriately control.
As described above, air conditioning performance of the conventional vehicle air conditioner in the interior of the vehicle deteriorates when cooling of the battery and air conditioning of the interior of the vehicle are performed in parallel.
It is an objective to provide a vehicle air conditioner that suppresses a decrease of a performance in air conditioning of a passenger compartment while the vehicle air conditioner concurrently performs cooling of a battery and air conditioning of the vehicle compartment.
According to an aspect of the present disclosure, a vehicle air conditioner includes an air-conditioning case that defines therein an air path, an inside blower that generates airflow toward an passenger compartment, and a communication duct through which an inside of the air-conditioning case and a battery housing space communicate.
A battery-cooling blower that guides air flowing inside the air-conditioning case to the battery housing space via the communication duct is disposed in the battery housing space. The communication duct is connected to a portion of the air-conditioning case located upstream of the inside blower with respect to the airflow.
This configuration secures an air volume necessary for cooling the battery by the battery-cooling blower while securing an air volume necessary for air conditioning of the interior of the vehicle by the inside blower. Accordingly, the vehicle air conditioner of the present disclosure independently produces a sufficient air volume for cooling the battery, and a sufficient air volume for air conditioning of the interior of the vehicle, thereby reducing deterioration of air-conditioning performance in the interior of the vehicle when cooling of the battery and air conditioning of the interior of the vehicle are performed in parallel.

BRIEF DESCRIPTION OF THE DRAWINGS

FIG. 1 is a schematic configuration diagram of a vehicle air conditioner of a first embodiment.

FIG. 2 is a flowchart showing a flow of a mode switching process executed by a controller of the first embodiment.

FIG. 3 is a schematic cross-sectional view of an inside air conditioning unit and a battery unit, showing a manner of airflow in a battery-cooling mode of the vehicle air conditioner of the first embodiment.

FIG. 4 is a schematic cross-sectional view of a vehicle air conditioner in a comparative example of the first embodiment.

FIG. 5 is a schematic cross-sectional view of an inside air conditioning unit and a battery unit of a second embodiment.

FIG. 6 is a schematic cross-sectional view of an inside air conditioning unit and a battery unit of a third embodiment.

FIG. 7 is a schematic configuration diagram of a vehicle air conditioner of a fourth embodiment.

FIG. 8 is a flowchart showing a flow of a mode switching process executed by a controller of the fourth embodiment.

FIG. 9 is a schematic cross-sectional view of an inside air conditioning unit and a battery unit, showing a manner of airflow in an inside air-conditioning mode of the vehicle air conditioner of the fourth embodiment.

FIG. 10 is a schematic cross-sectional view of an inside air conditioning unit and a battery unit, showing a manner of airflow in a battery-cooling mode of the vehicle air conditioner of the fourth embodiment.

EMBODIMENTS FOR EXPLOITATION OF THE INVENTION

Embodiments of the present disclosure will be hereinafter described with reference to the drawings. In the following embodiments, parts identical or equivalent to matters described in the preceding embodiments are given identical reference numerals, and description of these parts is omitted in some cases. When only a part of constituent elements are described in any of the embodiments, constituent elements described in the preceding embodiments are applicable to other parts of the constituent elements. The respective embodiments described herein may be partially combined with each other as long as no particular problems are caused even without explicit statement of these combinations.

(First embodiment)

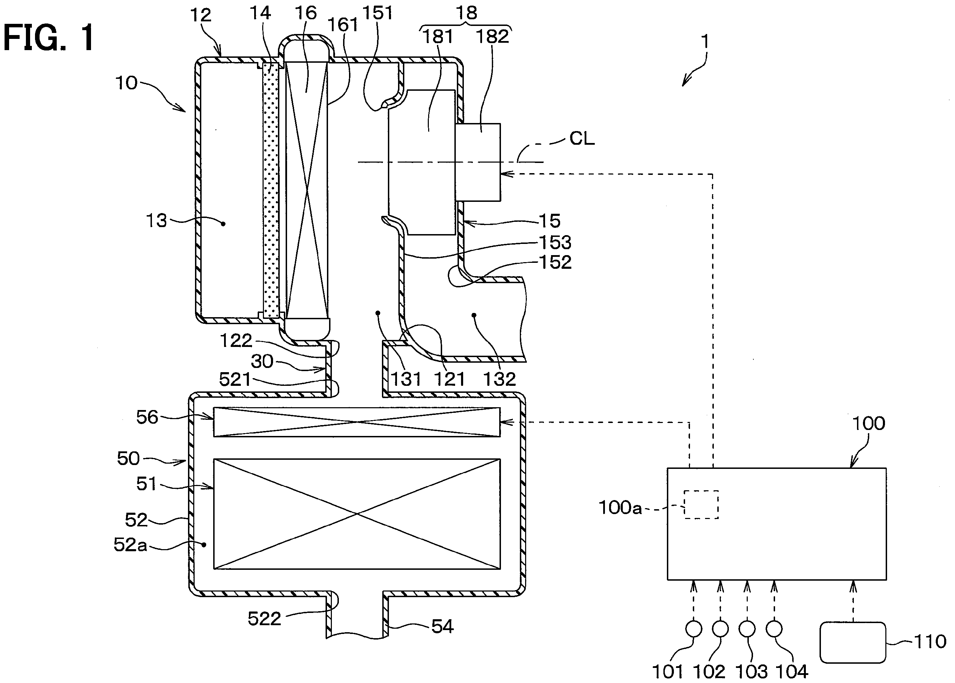

The present embodiment will be hereinafter described with reference to FIGS. 1 to 4. As shown in FIG. 1, a vehicle air conditioner 1 includes an inside air conditioning unit 10 for air-conditioning an interior of a vehicle, a battery unit 50 carrying a battery 51, and a controller 100.

The inside air conditioning unit 10 is disposed inside or at any other positions of an instrument panel disposed in a front part of the interior of the vehicle. The inside air conditioning unit 10 includes an air-conditioning case 12, a not-shown inside/outside air door, an evaporator 16, an inside blower 18, a not-shown heater core, a not-shown air mixing door, and others.

The air-conditioning case 12 constitutes an outer case of the inside air conditioning unit 10, and includes an air path 13 inside the air-conditioning case 12 as a path through which air flows toward the interior of the vehicle. The air-conditioning case 12 is a molded case made of resin having a certain degree of elasticity and excellent strength (e.g., polypropylene). In practical situations, the air-conditioning case 12 is constructed as an assembly of a plurality of divided cases for convenience of resin molding, convenience of internal parts assembly, and other reasons. Specifically, the air-conditioning case 12 is produced by fastening a plurality of divided cases using fastening members such as screws and clips.

Not-shown outside air introduction portion through which air outside the interior of the vehicle (i.e., outside air) is introduced, and inside air introduction portion through which air in the interior of the vehicle (i.e., inside air) is introduced are provided adjacent to each other on the airflow upstream side of the inside blower 18 in the air-conditioning case 12. Moreover, a not-shown inside/outside air door which controls an opening ratio of the outside air introduction portion to the inside air introduction portion is disposed inside the air-conditioning case 12.

The air-conditioning case 12 has not-shown defroster opening, face opening, and foot opening on the airflow downstream side of the inside blower 18. The defroster opening is an opening through which air is supplied toward the inside of window glass of the vehicle. The face opening is an opening through which air is supplied toward an upper body of an occupant in the interior of the vehicle. The foot opening is an opening through which air is supplied toward a lower body of the occupant in the interior of the vehicle. A not-shown blowing mode door capable of controlling opening and closing states of the foregoing openings is provided inside the air-conditioning case 12.

The air-conditioning case 12 includes an air filter 14 which collects foreign matters such as dust contained in air introduced from the outside air introduction portion or the inside air introduction portion. The air filter 14 is constituted by not-shown filter frame, filter element and the like.

The air-conditioning case 12 houses the evaporator 16 which functions as a cooling heat exchanger for cooling air flowing inside the air-conditioning case 12. The evaporator 16 is disposed on the airflow downstream side of the air filter 14 to allow air having passed through the air filter 14 to pass through the evaporator 16.

The evaporator 16 of the present embodiment is constituted by a low-pressure side heat exchanger in a vapor compression type refrigeration cycle. More specifically, the evaporator 16 is a heat exchanger which cools air flowing inside the air-conditioning case 12 by exchanging heat between air and low-temperature and low-pressure fluid (i.e., refrigerant) flowing inside, and evaporating the fluid. The evaporator 16 is a thin component having a rectangular external shape.

The inside blower 18 is disposed in the air-conditioning case 12 to generate airflow toward the interior of the vehicle. The inside blower 18 is disposed on the airflow downstream side of the evaporator 16 inside the air-conditioning case 12. The inside blower 18 includes a fan 181, and an electric motor 182 which rotates the fan 181. The inside blower 18 of the present embodiment is disposed in such a position that an extension direction of a fan axial center CL extends in a thickness direction of the evaporator 16.

The fan 181 is configured to blow air sucked in the extension direction of the fan axial center CL such that the blown air is blown out in a direction crossing the fan axial center CL. The fan 181 of the present embodiment is constituted by a centrifugal fan having characteristics of lower dynamic pressure and higher static pressure than those of an axial flow fan.

The centrifugal fan is herein classified into a sirocco fan, a radial fan, and a turbofan according to blade shape. The fan 181 of the present embodiment is constituted by a turbo fan capable of obtaining a high static pressure in the respective types of the centrifugal fan. The centrifugal fan may be constituted by a sirocco fan or a radial fan rather than a turbofan.

The air-conditioning case 12 includes a fan housing portion 15 which houses the fan 181. The fan housing portion 15 is formed on the airflow downstream side of the evaporator 16 in the air-conditioning case 12.

An air suction portion 151 defined in the fan housing portion 15 is a portion guiding air to an inside of the fan 181. An air blowing portion 152 defined in the fan housing portion 15 is a portion through which airflow generated inside the fan 181 is blown toward the air blowing side of the fan 181.

The fan housing portion 15 of the present embodiment includes a partitioning portion 153 which partitions the air path 13 into an upstream side space 131 on the airflow upstream side of the inside blower 18, and a downstream side space 132 on the airflow downstream side of the inside blower 18.

The inside blower 18 of the present embodiment is disposed such that the air suction portion 151 faces an air outflow surface 161 of the evaporator 16 to allow air having passed through the evaporator 16 to be easily introduced into the air suction portion 151. In other words, the evaporator 16 of the present embodiment is disposed in such a state that the air outflow surface 161 facing the air suction portion 151 is visible from the air suction portion 151.

A not-shown heater core is disposed on the airflow downstream side of the air blowing portion 152 in the air-conditioning case 12. The heater core is a heating heat exchanger for heating air having passed through the evaporator 16. For example, the heater core may be a heat exchanger for heating air having passed through the evaporator 16 by using, as a heat source, cooling water for cooling an internal combustion engine.

The air-conditioning case 12 includes a not-shown cold air bypass path on the downstream side of the air blowing portion 152. The cold air bypass path is a path through which airflow blown from the inside blower 18 flows while bypassing the heater core.

The air mixing door is further disposed in the air-conditioning case 12. The air mixing door is a member for controlling an air volume ratio of air passing through the heater core to air passing through the cold air bypass path. The air-conditioning case 12 includes the defroster opening, the face opening, and the foot opening described above on the airflow downstream side of the heater core and the cold air bypass path.

The air-conditioning case 12 herein includes an intermediate opening 122 formed in an intermediate wall surface portion 121 which constitutes the air path 13 extending from the evaporator 16 toward the air suction side of the inside blower 18. The intermediate opening 122 is an opening through which cold air cooled by the evaporator 16 is discharged to a battery housing space 52a described below. It is desirable that the intermediate opening 122 is formed at a portion to which condensed water generated in the evaporator 16 is difficult to adhere in the intermediate wall surface portion 121. A communication duct 30 is connected to the intermediate opening 122 to communicatively connect the inside of the air-conditioning case 12 with the battery housing space 52a described below.

One end of the communication duct 30 is connected to a portion located on the airflow upstream side of the inside blower 18 in the air-conditioning case 12, i.e., the intermediate opening 122 of the intermediate wall surface portion 121. The other end of the communication duct 30 is connected to an air suction port 521 formed in a battery case 52.

The battery unit 50 will be now described. The battery unit 50 is mounted under a floor of the vehicle. The mounting position of the battery unit 50 is not limited to the position under the floor of the vehicle, but may be a position below a trunk room or a seat of the vehicle.

The battery unit 50 is configured to cool the battery 51 utilizing cold air generated by the inside air conditioning unit 10. The battery unit 50 includes the battery 51, the battery case 52, an exhaust duct 54, and a battery-cooling blower 56.

The battery 51 supplies a predetermined high voltage to in-vehicle devices. For example, the battery 51 is constituted by a large-capacity battery which supplies power to a traveling motor generating driving force during traveling of the vehicle.

The battery 51 is constituted by a secondary battery which is chargeable and dischargeable. For example, the battery 51 is constructed as a battery pack which includes battery cells such as lithium ion batteries electrically connected in series or in parallel.

The battery case 52 constitutes an outer case of the battery unit 50, and includes the battery housing space 52a for housing the battery 51 inside the battery case 52. The battery housing space 52a also functions as an air path through which cold air generated by the inside air conditioning unit 10 flows via the communication duct 30.

The battery case 52 includes the air suction port 521 through which air is introduced into the battery housing space 52a, and an air discharge port 522 through which air is discharged from the battery housing space 52a. The communication duct 30 is connected to the air suction port 521. The exhaust duct 54, which is a duct through which air in the battery housing space 52a is guided to the outside of the vehicle, is connected to the air discharge port 522.

The battery-cooling blower 56 is disposed in the battery housing space 52a. The battery-cooling blower 56 is a blower which guides air flowing inside the air-conditioning case 12 to the battery housing space 52a via the communication duct 30.

The battery-cooling blower 56 of the present embodiment is disposed on the airflow upstream side of the battery 51 in the battery housing space 52a. Specifically, the battery-cooling blower 56 is disposed at a position closer to the communication duct 30 than the battery 51 is in the battery housing space 52a. In other words, the battery-cooling blower 56 is disposed at a position farther from the exhaust duct 54 than the battery 51 is.

The battery-cooling blower 56 is constituted by an electric blower including not-shown fan and electric motor. For example, the fan of the battery-cooling blower 56 is constituted by an axial flow fan. The fan of the battery-cooling blower 56 is not limited to an axial flow fan, but may be a centrifugal fan or the like.

The controller 100 which constitutes an electronic control unit of the vehicle air conditioner 1 will be now described. The controller 100 includes a known microcomputer including a central processing unit (CPU), a storage unit, and the like, and peripheral circuits of the microcomputer. The controller 100 is a device which performs various calculations and processes under control programs stored in the storage unit or the like. The storage unit of the controller 100 is constituted by a non-transitory tangible storage medium.

Air-conditioning sensor groups, such as an inside air sensor 101 for detecting an inside air temperature, an outside air sensor 102 for detecting an outside air temperature, and a solar sensor 103 for detecting a solar radiation quantity into the interior of the vehicle, are connected to the input side of the controller 100.

A battery temperature sensor 104 for detecting a temperature of the battery 51 is further connected to the input side of the controller 100. For example, the battery temperature sensor 104 is constituted by a temperature sensor for detecting a surface temperature of the battery 51.

An operation unit 110 operated by the occupant is further connected to the input side of the controller 100. The operation unit 110 includes an air-conditioning operation switch, a temperature setting switch for setting a setting temperature of the interior of the vehicle, and others.

On the other hand, control target devices operating under control by control signals output from the controller 100 are connected to the output side of the controller 100. Specifically, the inside blower 18, the battery-cooling blower 56, and others are connected to the controller 100 as control target devices.

The controller 100 includes a plurality of integrated control units constituted by hardware and software for controlling the control target devices connected to the output side of the controller 100. For example, the controller 100 according to the present embodiment includes a mode control unit 100a integrated to switch operation modes such as an inside air-conditioning mode for only air-conditioning of the interior of the vehicle, and a battery-cooling mode for performing both air-conditioning of the interior of the vehicle and cooling of the battery 51 in parallel.

An operation of the vehicle air conditioner 1 configured as described above will be now described. The operation mode of the vehicle air conditioner 1 is switchable between the inside air-conditioning mode and the battery-cooling mode. Specifically, when an air-conditioning operation switch of the operation unit 110 is turned on in a state of power supply in the vehicle air conditioner 1, the controller 100 executes a mode switching process for switching the operation mode.

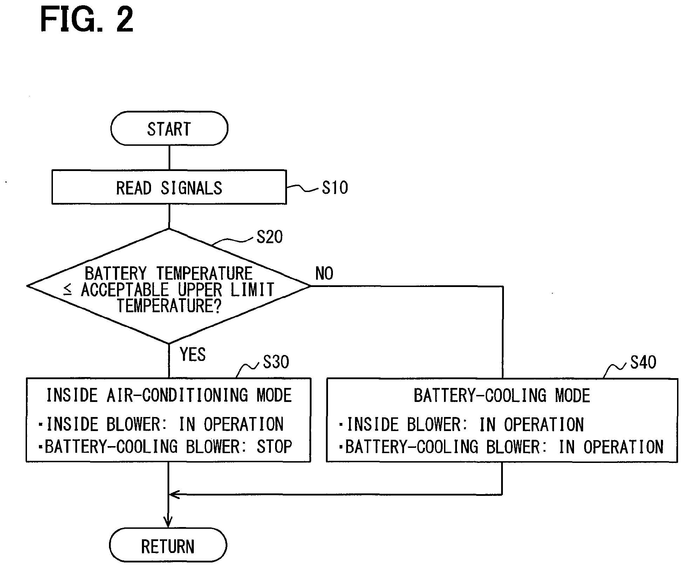

In the present embodiment, an outline of the mode switching process executed by the controller 100 will be described with reference to a flowchart shown in FIG. 2. Each control step of the mode switching process shown in FIG. 2 constitutes a function implementing section which implements a corresponding function executed by the controller 100.

In step S10, the controller 100 reads sensor signals of the respective sensors 101 to 104, and an operation signal of the operation unit 110 as shown in FIG. 2. In subsequent step S20, the controller 100 determines whether or not a battery temperature detected by the battery temperature sensor 104 is equal to or lower than an acceptable upper limit temperature.

The battery 51 herein may generate heat and have a high temperature during charge, or during discharge for supplying power to the not-shown traveling motor. When the temperature of the battery 51 exceeds a predetermined temperature (e.g., 40°C), problems such as performance drop and deterioration may be caused. In consideration of these problems, the acceptable upper limit temperature is set to 40°C or lower, for example. It is preferable that the acceptable upper limit temperature is set to an appropriate temperature according to the type of battery constituting the battery 51.

When it is determined that the battery temperature is equal to or lower than the acceptable upper limit temperature based on a result of the determination process in step S20, cooling of the battery 51 is considered to be unnecessary. Accordingly, the controller 100 selects the inside air-conditioning mode as the operation mode in step S30.

In the inside air-conditioning mode, the controller 100 brings the inside blower 18 into an operating state while stopping the operation of the battery-cooling blower 56. In the inside air-conditioning mode, the controller 100 controls operations of the control target devices such as the inside blower 18 based on a target blowing temperature TAO which is a target temperature of air blown to the interior of the vehicle.

Specifically, the controller 100 calculates the target blowing temperature TAO, which is the target temperature of the air blown to the interior of the vehicle, in the inside air-conditioning mode. For example, the controller 100 calculates TAO by following [Expression 1].

$$TAO = Kset \times Tset - Kr \times Tr - Kam \times Tam - Ks \times Ts + C \ ... \ [Expression \ 1]$$

In Expression 1, Tset is a setting temperature set for a temperature setting switch, Tr is a detection value of the inside air sensor 101, Tam is a detection value of the outside air sensor 102, and Ts is a detection value of the solar sensor 103. In addition, Kset, Kr, Kam, and Ks are control gains, while C is a correction constant.

Thereafter, the controller 100 refers to a control map stored in the storage unit beforehand, and determines respective operation states of the control target devices such as the inside blower 18 based on TAO or the like. When high air-conditioning performance is required based on TAO lying in an extremely high temperature region or an extremely low temperature region, for example, the controller 100 selects a high rotation speed as a rotation speed of the inside blower 18 to obtain a maximum air volume. For example, the controller 100 determines the rotation speed of the inside blower 18 such that the air volume decreases as a temperature difference between TAO and the temperature of the interior of the vehicle becomes smaller.

In the inside air-conditioning mode, the controller 100 brings the inside blower 18 into the operating state while stopping the operation of the battery-cooling blower 56. In this case, airflow directed toward the inside of the vehicle is generated inside the air-conditioning case 12.

As a result, airflow introduced from the outside air introduction portion or the inside air introduction portion flows into the evaporator 16 via the air filter 14 in the upstream side space 131 of the air path 13. After cooled to a predetermined temperature by the evaporator 16, the airflow is sucked into the inside blower 18 from the air suction portion 151. The air sucked into the inside blower 18 is blown from the inside of the fan 181 toward the outside in a radial direction. The airflow flows through the downstream side space 132 in the air path 13. The airflow in the downstream side space 132 passes through the not-shown heater core or cold air bypass path, and then is blown out to the interior of the vehicle through any of the openings.

When it is determined that the battery temperature exceeds the acceptable upper limit temperature based on a result of the determination process in step S20, cooling of the battery 51 is considered to be necessary. Accordingly, the controller 100 selects the battery-cooling mode as the operation mode in step S40.

In the battery-cooling mode, the controller 100 brings both the inside blower 18 and the battery-cooling blower 56 into the operating state. In the battery-cooling mode, the controller 100 brings the control target devices on the inside air conditioning unit 10 side into operating states similar to the corresponding operating states in the inside air-conditioning mode.

In the battery-cooling mode, the controller 100 controls the battery-cooling blower 56 such that the rotation speed becomes a predetermined reference rotation speed. The controller 100 may be configured to control the battery-cooling blower 56 such that the rotation speed increases as the battery temperature becomes higher in the battery-cooling mode.

In the battery-cooling mode, both the inside blower 18 and the battery-cooling blower 56 are brought into the operating state by the controller 100. In this case, airflow toward the interior of the vehicle and airflow toward the battery housing space 52a are generated inside the air-conditioning case 12.

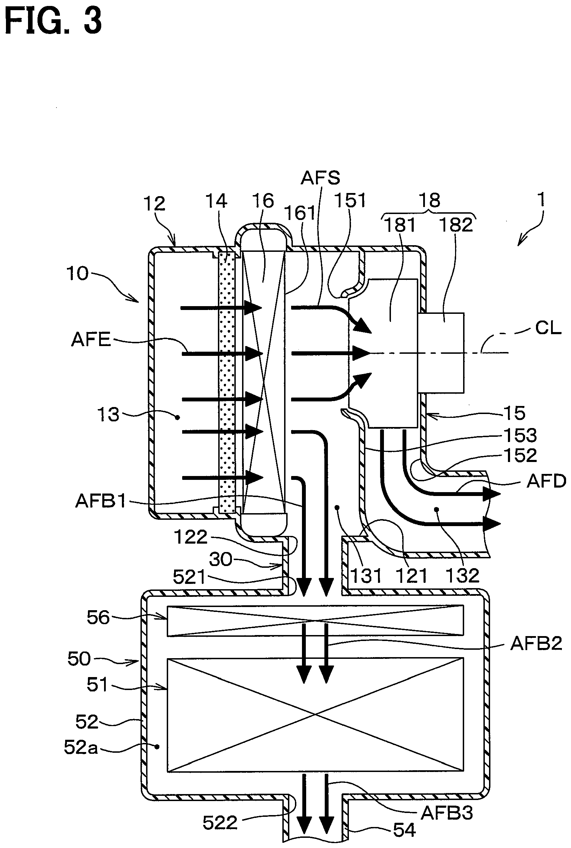

As a result, airflow introduced from the outside air introduction portion or the inside air introduction portion flows into the evaporator 16 via the air filter 14 as indicated by arrows AFE in FIG. 3, and is cooled to a predetermined temperature by the evaporator 16 in the upstream side space 131 of the air path 13.

Thereafter, the air cooled by the evaporator 16 is sucked into the inside blower 18 from the air suction portion 151 as indicated by arrows AFS in FIG. 3, and is also sucked into the battery-cooling blower 56 of the battery housing space 52a via the communication duct 30 as indicated by arrows AFB1 in FIG. 3.

The air sucked into the inside blower 18 is blown from the inside of the fan 181 toward the outside in the radial direction as indicated by arrows AFD in FIG. 3. After passing through the not-shown heater core or cold air bypass path, this air flow is blown into the interior of the vehicle through any of the openings.

On the other hand, the air sucked into the battery-cooling blower 56 is blown toward the battery 51 positioned on the airflow downstream side of the battery-cooling blower 56 as indicated by arrows AFB2 in FIG. 3. Consequently, the battery 51 is cooled. The air having absorbed heat from the battery 51 in the battery housing space 52a is discharged to the outside of the vehicle via the exhaust duct 54 as indicated by arrows AFB3 in FIG. 3.

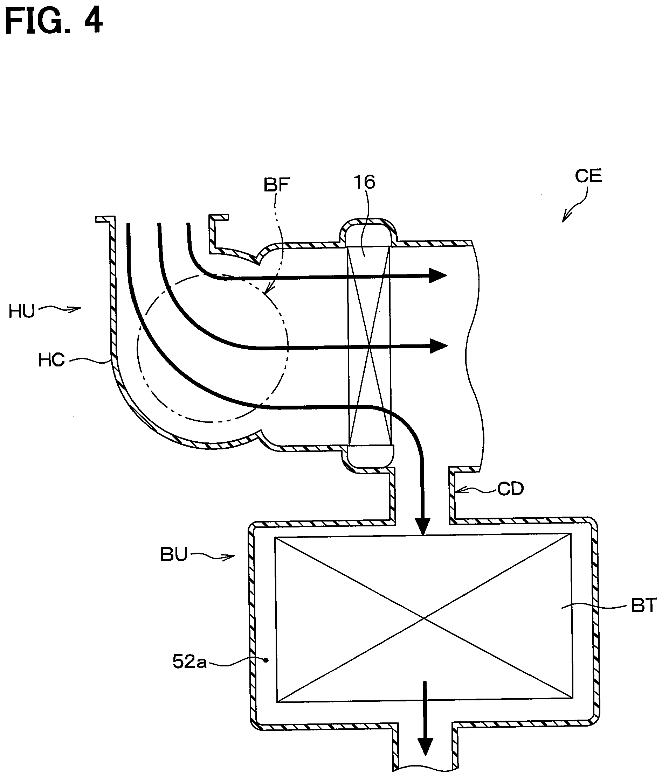

The vehicle air conditioner 1 according to a comparative example of the present embodiment will be hereinafter described with reference to FIG. 4. FIG. 4 is a schematic cross-sectional view of a vehicle air conditioner CE of the comparative example. Concerning the vehicle air conditioner CE of the comparative example in FIG. 4, configurations similar to corresponding configurations of the vehicle air conditioner 1 of the present embodiment are given identical reference numerals for convenience of explanation.

According to an inside air conditioning unit HU of the vehicle air conditioner CE of the comparative example, an inside blower BF is disposed on the airflow upstream side of the evaporator 16 in an air-conditioning case HC as shown in FIG. 4. A communication duct CD which guides air having passed through the evaporator 16 to the battery housing space 52a is connected to the airflow downstream side of the evaporator 16 in the air-conditioning case HC.

A battery unit BU of the vehicle air conditioner CE of the comparative example does not include a dedicated blower for supplying air to a battery BT. Other configurations are similar to corresponding configurations of the vehicle air conditioner 1 of the present embodiment.

According to the vehicle air conditioner CE of the comparative example, air blown from the inside blower BF flows into the evaporator 16 when the inside blower BF operates. Thereafter, a part of air having passed through the evaporator 16 is supplied to the battery BT via the communication duct CD, while the remaining air passes through the not-shown heater core or cold air bypass path, and then is blown to the interior of the vehicle via one of the openings.

In case of the configuration of connection between the communication duct CD communicating with the battery housing space 52a and the airflow downstream side of the inside blower BF like the configuration of the vehicle air conditioner CE of the comparative example, a part of airflow generated by the inside blower BF flows toward the battery unit BU. In case of the vehicle air conditioner CE of the comparative example, an air volume blown to the interior of the vehicle decreases during cooling of the battery BT. This condition may deteriorate comfort of an occupant of the vehicle during air conditioning, and therefore is considered undesirable.

Moreover, according to the inside air conditioning unit HU of the air-mixing type, for example, a mixing ratio of cold air to warm air in the inside air conditioning unit HU changes when cold air cooled by the evaporator 16 is introduced toward the battery BT. Accordingly, in case of the inside air conditioning unit HU of the air-mixing type, the temperature of the air blown to the interior of the vehicle is difficult to appropriately control.

As apparent from above, air-conditioning performance of the vehicle air conditioner CE of the comparative example in the interior of the vehicle deteriorates when cooling of the battery BT and air conditioning in the vehicle interior are performed in parallel.

According to the vehicle air conditioner 1 of the present embodiment, however, the inside blower 18 is disposed inside the air-conditioning case 12, while the battery-cooling blower 56 is disposed in the battery housing space 52a.

In addition, according to the vehicle air conditioner 1 of the present embodiment, the communication duct 30 through which cold air is introduced into the battery housing space 52a is connected to a portion on the airflow upstream side of the inside blower 18 in the air-conditioning case 12 (i.e., intermediate wall surface portion 121).

This configuration secures an air volume necessary for cooling the battery 51 by the battery-cooling blower 56 while securing an air volume necessary for air conditioning of the interior of the vehicle by the inside blower 18. Accordingly, the vehicle air conditioner 1 of the present embodiment can independently produce sufficient air volume required for cooling the battery 51 and air volume required for air conditioning of the interior of the vehicle. The vehicle air conditioner 1 of the present embodiment therefore can reduce deterioration of air-conditioning performance for the interior of the vehicle when cooling of the battery 51 and air conditioning of the interior of the vehicle are performed in parallel.

Particularly, the communication duct 30 of the present embodiment is connected between the evaporator 16 and the inside blower 18 in the air-conditioning case 12. In this case, cold air cooled by the evaporator 16 can be introduced into the battery housing space 52a by the battery-cooling blower 56. Accordingly, the battery 51 can be sufficiently cooled by cold air cooled by the evaporator 16 of the inside air conditioning unit 10.

(Second embodiment)

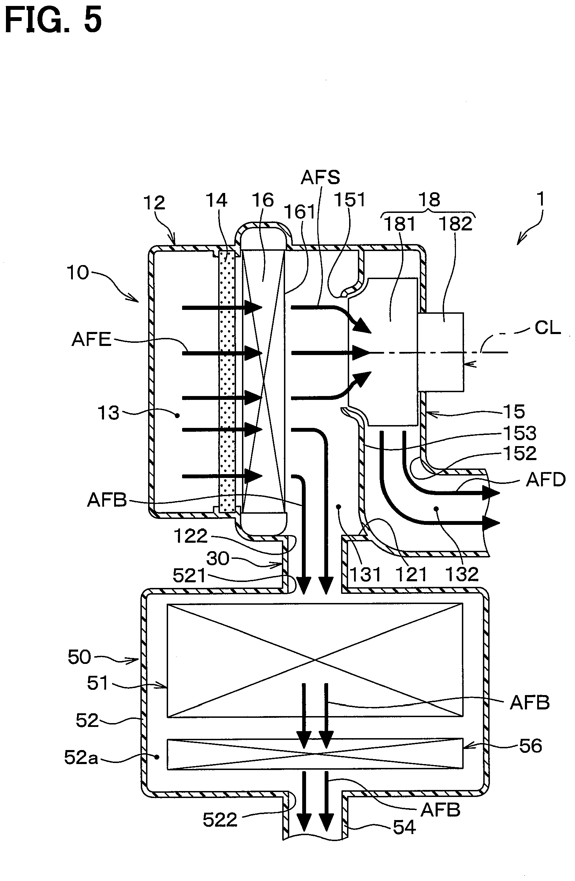

A second embodiment will be now described with reference to FIG. 5. The present embodiment is different from the first embodiment in the mounting position of the battery-cooling blower 56 in the battery unit 50.

As shown in FIG. 5, the battery-cooling blower 56 of the present embodiment is disposed on the airflow downstream side of the battery 51 in the battery housing space 52a. Specifically, the battery-cooling blower 56 of the present embodiment is disposed at a position closer to the exhaust duct 54 than the battery 51 is. In other words, the battery-cooling blower 56 of the present embodiment is disposed at a position farther from the communication duct 30 than the battery 51 is.

Other configurations of the vehicle air conditioner 1 of the present embodiment are similar to the corresponding configurations of the first embodiment. The vehicle air conditioner 1 of the present embodiment can produce operational effects similar to the operational effects of the first embodiment by using a configuration common to the configuration of the first embodiment.

The electric motor and others of the battery-cooling blower 56 generate heat during operation of the battery-cooling blower 56. Accordingly, when the battery-cooling blower 56 is disposed on the airflow upstream side of the battery 51, the temperature of the air supplied to the battery 51 may be raised by the heat of the battery-cooling blower 56.

According to the vehicle air conditioner 1 of the present embodiment, however, the battery-cooling blower 56 is disposed on the airflow downstream side of the battery 51 in the battery housing space 52a. This configuration prevents a temperature rise of the air supplied to the battery 51 by the heat generated during operation of the battery-cooling blower 56, and therefore efficiently cools the battery 51.


(Third embodiment)

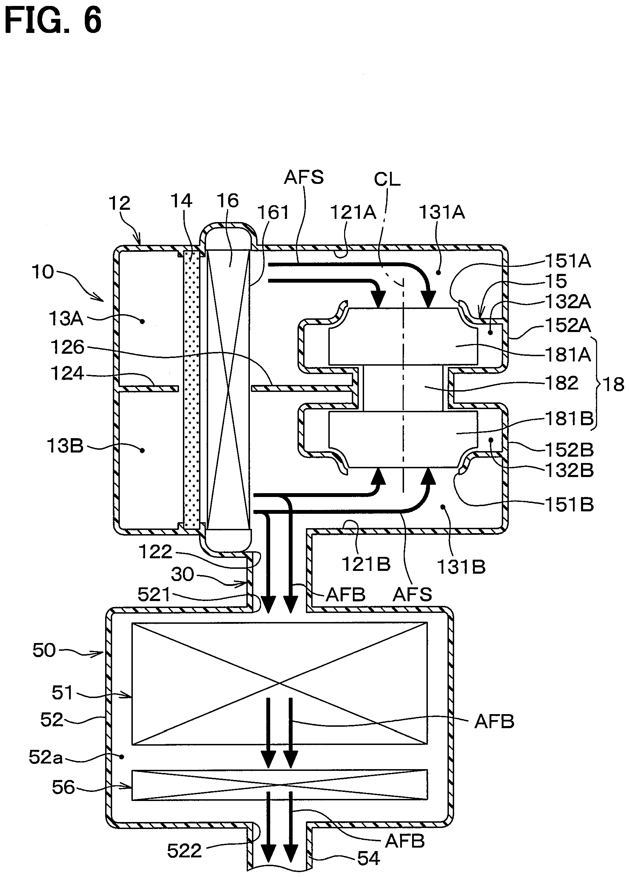

A third embodiment will be now described with reference to FIG. 6. The present embodiment is different from the second embodiment in that an inside air path 13A through which inside air flows, and an outside air path 13B through which outside air flows are formed inside the air-conditioning case 12.

As shown in FIG. 6, the air-conditioning case 12 includes a first partition wall portion 124 and a second partition wall portion 126 for partitioning the inside of the air-conditioning case 12 into the inside air path 13A and the outside air path 13B. The first partition wall portion 124 is provided on the airflow upstream side of the air filter 14 in the air-conditioning case 12. The second partition wall portion 126 is provided between the evaporator 16 and the inside blower 18 in the air-conditioning case 12.

The inside blower 18 of the present embodiment is constituted by a double fan type blower which drives two fans, i.e., a first fan 181A and a second fan 181B, by a single electric motor 182. The first fan 181A is a fan which generates airflow in the inside air path 13A. The second fan 181B is a fan which generates airflow in the outside air path 13B.

A first air suction portion 151A for guiding air into the first fan 181A, and a second air suction portion 151B for guiding air into the second fan 181B are defined in the fan housing portion 15 of the present embodiment. Moreover, a first air blowing portion 152A through which airflow generated inside the first fan 181A is blown out, and a second air blowing portion 152B through which airflow generated inside the second fan 181B is blown out are defined in the fan housing portion 15.

The inside blower 18 is disposed such that both of the air suction portions 151A and 151B do not face the air outflow surface 161 of the evaporator 16 to prevent flow of air having passed through the evaporator 16 in a biased manner toward one of the first air suction portion 151A and the second air suction portion 151B. In other words, the evaporator 16 of the present embodiment is disposed in such a state that the air outflow surface 161 does not face the air suction portion 151 to prevent visual recognition of the evaporator 16 from the respective air suction portions 151A and 151B.

The air-conditioning case 12 of the present embodiment is partitioned by the fan housing portion 15 into a first upstream side space 131A on the airflow upstream side of the inside blower 18, and a first downstream side space 132A on the airflow downstream side of the inside blower 18 in the inside air path 13A. The air-conditioning case 12 of the present embodiment is further partitioned by the fan housing portion 15 into a second upstream side space 131B on the airflow upstream side of the inside blower 18, and a second downstream side space 132B on the airflow downstream side of the inside blower 18 in the outside air path 13B.

The air-conditioning case 12 herein includes a first intermediate wall surface portion 121A which forms the inside air path 13A extending from the evaporator 16 to the first fan 181A, and a second intermediate wall surface portion 121B which forms the outside air path 13B extending from the evaporator 16 to the second fan 181B.

The second intermediate wall surface portion 121B includes the intermediate opening 122 through which cold air cooled by the evaporator 16 is discharged to the battery housing space 52a. The communication duct 30 is connected to the intermediate opening 122 to communicatively connect the inside of the air-conditioning case 12 with the battery housing space 52a.

Other configurations of the vehicle air conditioner 1 of the present embodiment are similar to the corresponding configurations of the second embodiment described above. The vehicle air conditioner 1 of the present embodiment can produce operational effects similar to the operational effects of the embodiments described above by using a configuration common to the configuration of the second embodiment.

Note herein that a sigh or the like of the occupant tends to raise humidity of inside air higher than that of outside air. Accordingly, dew condensation may be produced in the battery 51 in the configuration which introduces inside air into the battery housing space 52a.

Moreover, in the winter season, air conditioning of the interior of the vehicle raises the temperature of inside air higher than the temperature of outside air. Accordingly, the battery 51 may be difficult to sufficiently cool in the configuration which introduces inside air into the battery housing space 52a.

According to the vehicle air conditioner 1 of the present embodiment, however, the communication duct 30 is connected to the portion which forms the outside air path 13B in the air-conditioning case 12 (i.e., second intermediate wall surface portion 121B) to introduce outside air into the battery housing space 52a in the battery-cooling mode.

This configuration introduces outside air, which is likely to have lower humidity than that of inside air, into the battery housing space 52a as indicated by the arrows AFB1 in FIG. 6. Accordingly, dew condensation in the battery 51 decreases in the battery-cooling mode. Moreover, in the winter season, outside air having a temperature lower than that of the inside air is introduced into the battery housing space 52a. Accordingly, efficient cooling for the battery 51 is achievable.

(Fourth embodiment)

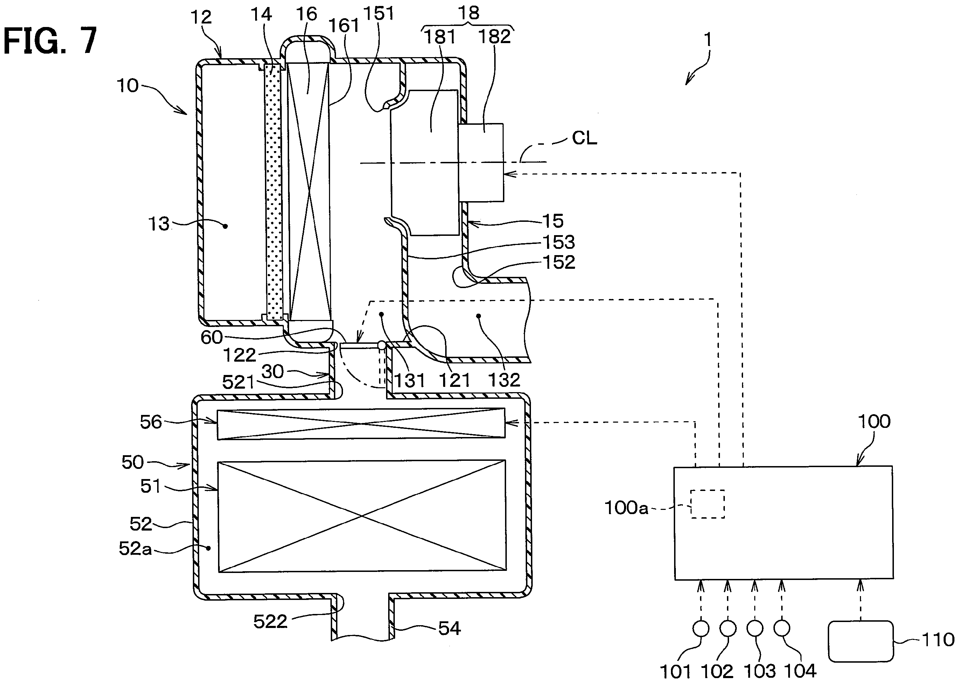

A fourth embodiment will be hereinafter described with reference to FIGS. 7 to 10. The vehicle air conditioner 1 of the present embodiment is different from that of the first embodiment in that an opening-closing door 60 is added to switch an air circulation state between the inside of the air-conditioning case 12 and the battery housing space 52a.

As shown in FIG. 7, the vehicle air conditioner 1 according to the present embodiment includes the opening-closing door 60 disposed in the communication duct 30. The opening-closing door 60 functions as a switching mechanism which switches between an allowing state where air circulation between the inside of the air-conditioning case 12 and the battery housing space 52a is allowed, and a shut-off state where air circulation between the inside of the air-conditioning case 12 and the battery housing space 52a is blocked.

Specifically, the opening-closing door 60 is configured to shift between an open position for opening the intermediate opening 122 of the air-conditioning case 12, and a close position for closing the intermediate opening 122. More specifically, the opening-closing door 60 of the present embodiment is constituted by a cantilever type door. The opening-closing door 60 is not limited to a cantilever type door, but may be constituted by a butterfly door, a sliding door, or others.

In addition, the opening-closing door 60 of the present embodiment is constituted by an electric door openable and closable according to a control signal from the controller 100. The opening-closing door 60 is connected to the output side of the controller 100 to be controlled by the controller 100.

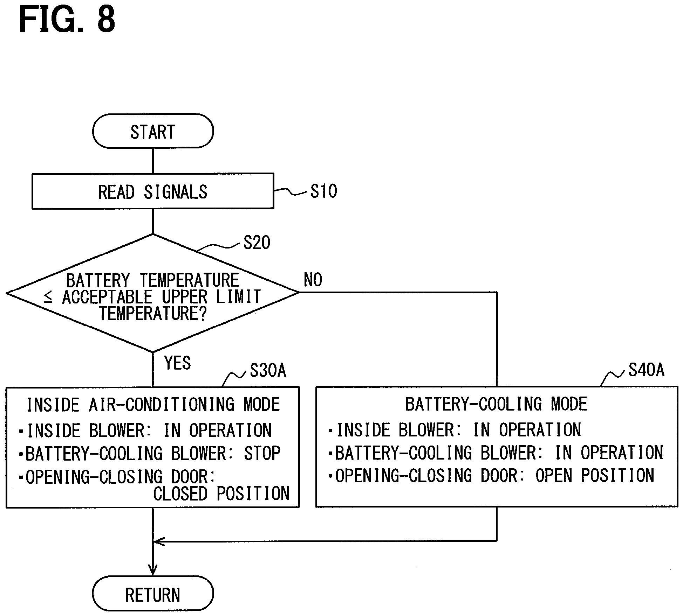

Other configurations of the vehicle air conditioner 1 of the present embodiment are similar to the corresponding configurations of the first embodiment. An outline of the mode switching process executed by the controller 100 of the present embodiment will be hereinafter described with reference to a flowchart shown in FIG. 8. Each control step of the mode switching process shown in FIG. 8 constitutes a function implementing section which implements a corresponding function executed by the controller 100.

In step S10, the controller 100 reads sensor signals of the respective sensors 101 to 104, and an operation signal of the operation unit 110 as shown in FIG. 8. In subsequent step S20, the controller 100 determines whether or not a battery temperature detected by the battery temperature sensor 104 is equal to or lower than an acceptable upper limit temperature.

When it is determined that the battery temperature is equal to or lower than the acceptable upper limit temperature based on a result of the determination process in step S20, cooling of the battery 51 is considered to be unnecessary. Accordingly, the controller 100 selects the inside air-conditioning mode as the operation mode in step S30A.

In the inside air-conditioning mode, the controller 100 brings the inside blower 18 into an operating state while stopping the operation of the battery-cooling blower 56 and shifting the opening-closing door 60 to the close position of the intermediate opening 122. Similarly to the first embodiment, the controller 100 controls operations of the control target devices such as the inside blower 18 based on the target blowing temperature TAO.

In the inside air-conditioning mode, the controller 100 brings the inside blower 18 into the operating state while stopping the operation of the battery-cooling blower 56. In this case, airflow directed toward the inside of the vehicle is generated inside the air-conditioning case 12.

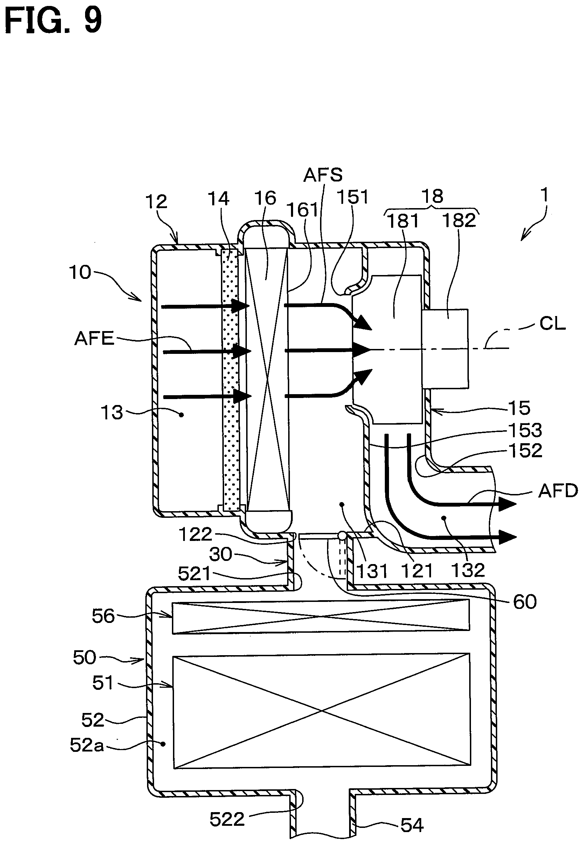

As a result, airflow introduced from the outside air introduction portion or the inside air introduction portion flows into the evaporator 16 via the air filter 14 in the upstream side space 131 of the air path 13 as indicated by arrows AFE in FIG. 9. After cooled to a predetermined temperature by the evaporator 16, the airflow is sucked into the inside blower 18 from the air suction portion 151 as indicated by arrows AFS in FIG. 9.

When the opening-closing door 60 is in the open position of the intermediate opening 122 in this condition, air in the battery housing space 52a may flow into the inside blower 18 via the communication duct 30. When the air in the battery housing space 52a is sucked into the inside blower 18, the temperature of the air cooled by the evaporator 16 may increase. In this case, air-conditioning performance in the interior of the vehicle may deteriorate.

According to the vehicle air conditioner 1 of the present embodiment, however, the opening-closing door 60 is shifted to the close position of the intermediate opening 122 in the inside air-conditioning mode. In this case, air in the battery housing space 52a is not sucked into the inside blower 18.

Subsequently, the air sucked into the inside blower 18 is blown from the inside of the fan 181 toward the outside in the radial direction as indicated by arrows AFD in FIG. 9. After passing through the not-shown heater core or cold air bypass path, this air flow is blown into the interior of the vehicle through any of the openings.

When it is determined that the battery temperature exceeds the acceptable upper limit temperature based on a result of the determination process in step S20, cooling of the battery 51 is considered to be necessary. Accordingly, the controller 100 selects the battery-cooling mode as the operation mode in step S40A.

In the battery-cooling mode, the controller 100 brings both the inside blower 18 and the battery-cooling blower 56 into the operating state while shifting the opening-closing door 60 to the open position of the intermediate opening 122. Similarly to the first embodiment, the controller 100 controls operations of the control target devices such as the inside blower 18 and the battery-cooling blower 56.

In the battery-cooling mode, both the inside blower 18 and the battery-cooling blower 56 are brought into the operating state by the controller 100. In this case, airflow toward the interior of the vehicle and airflow toward the battery housing space 52a are generated inside the air-conditioning case 12.

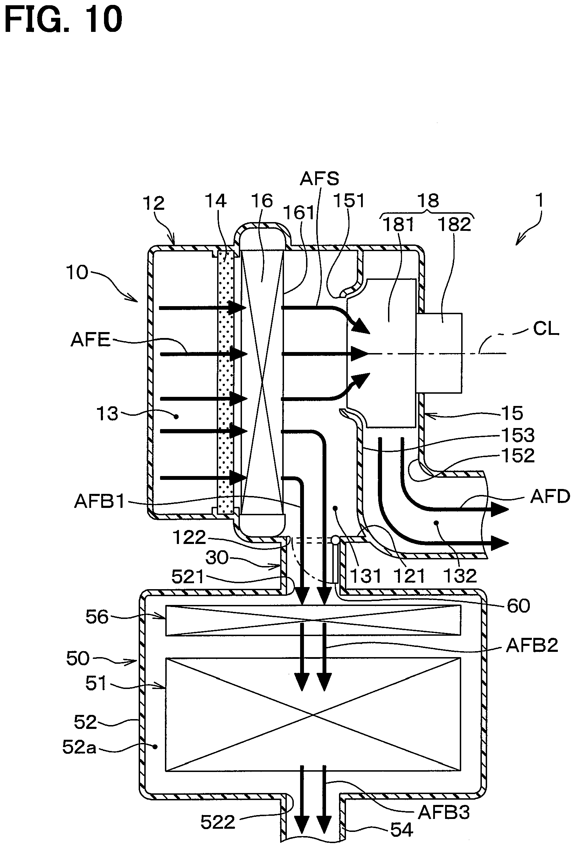

As a result, airflow introduced from the outside air introduction portion or the inside air introduction portion flows into the evaporator 16 via the air filter 14 as indicated by arrows AFE in FIG. 10, and is cooled to a predetermined temperature by the evaporator 16 in the upstream side space 131 of the air path 13. Thereafter, the air cooled by the evaporator 16 is sucked from the air suction portion 151 into the inside blower 18 as indicated by arrows AFS in FIG. 10.

The air sucked into the inside blower 18 is blown from the inside of the fan 181 toward the outside in the radial direction as indicated by arrows AFD in FIG. 10. After passing through the not-shown heater core or cold air bypass path, this air flow is blown into the interior of the vehicle through any of the openings.

The opening-closing door 60 is herein shifted to the open position of the intermediate opening 122 in the battery-cooling mode. Accordingly, air cooled by the evaporator 16 is sucked into the battery-cooling blower 56 of the battery housing space 52a via the communication duct 30 as indicated by arrows AFB1 in FIG. 10.

The air sucked into the battery-cooling blower 56 is blown out toward the battery 51 positioned on the airflow downstream side of the battery-cooling blower 56 as indicated by arrows AFB2 in FIG. 10. Consequently, the battery 51 is cooled. The air having absorbed heat from the battery 51 in the battery housing space 52a is discharged to the outside of the vehicle via the exhaust duct 54 as indicated by arrows AFB3 in FIG. 10.

Operational effects similar to the operational effects described in the first embodiment can be produced by the vehicle air conditioner 1 of the present embodiment by using the basic configuration common to the basic configuration of the first embodiment.

Moreover, the vehicle air conditioner 1 of the present embodiment includes the opening-closing door 60 as a switching mechanism which switches between the allowing state where air circulation between the inside of the air-conditioning case 12 and the battery housing space 52a is allowed, and the shut-off state for blocking air circulation.

This configuration prevents airflow from the battery housing space 52a to the inside of the air-conditioning case 12 without cooling stop of the battery 51 with stop of the battery-cooling blower 56 (i.e., during only air conditioning of the interior of the vehicle). Accordingly, deterioration of air-conditioning performance in the interior of the vehicle is prevented when only air conditioning is performed in the interior of the vehicle.

While the configuration of the vehicle air conditioner 1 of the first embodiment which includes the opening-closing door 60 has been described in the present embodiment, the opening-closing door 60 may be included in the configurations of the embodiments other than the first embodiment. The opening-closing door 60 may be included in the vehicle air conditioner 1 described in the second embodiment or the third embodiment.

According to the configuration of the present embodiment presented by way of example, the intermediate opening 122 is opened or closed by the opening-closing door 60. However, other configurations may be adopted. For example, the opening-closing door 60 may be configured to open and close the air suction port 521 of the battery case 52.

According to the configuration of the present embodiment presented by way of example, the opening-closing door 60 is constituted by the electric door. However, other configurations may be adopted. For example, the opening-closing door 60 may be a mechanical door configured to shift to the close position during stop of the battery-cooling blower 56, and shift to the open position during operation of the battery-cooling blower 56.

(Other embodiments)

The present disclosure is not limited to the typical embodiments of the present disclosure described herein, but may include various modifications, such as following configurations.

According to the configurations of the respective embodiments described above by way of example, the evaporator 16 is disposed in the upstream side space 131 of the air path 13. However, other configurations may be adopted. For example, the inside air conditioning unit 10 may be configured such that both the evaporator 16 and the heater core are disposed in the downstream side space 132 of the air path 13. Alternatively, for example, the inside air conditioning unit 10 may be configured such that both the evaporator 16 and the heater core are disposed in the upstream side space 131 of the air path 13.

According to the configurations of the respective embodiments described above by way of example, the battery-cooling blower 56 is disposed on the airflow upstream side of the battery 51 or the airflow downstream side of the battery 51. However, other configurations may be adopted. For example, the battery-cooling blower 56 may be attached to and combined with the battery 51 into one body in a similar position with respect to the airflow.

According to the configurations of the respective embodiments described above by way of example, air is cooled by the evaporator 16 of the refrigeration cycle. However, other configurations may be adopted. The cooling heat exchanger for cooling air is not limited to the evaporator 16, but may be a heat exchanger where cold water circulates inside the heat exchanger, for example.

Needless to say, in the embodiments described above, the elements constituting the embodiment are not necessarily essential unless clearly expressed as particularly essential, or considered as obviously essential in principle, for example.

In the embodiments described above, values such as numbers of the constituent elements, numerical values, quantities, and ranges in the embodiment are not limited to the specific values described herein unless clearly expressed as particularly essential, or considered as obviously limited to the specific values in principle, for example.

In the embodiments described above, the shapes, positional relationships, or other conditions of the constituent elements and the like described in the embodiment are not limited to specific shapes, positional relationships, or other conditions unless clearly expressed, or limited to the specific shapes, positional relationships, or other conditions in principle.

(Conclusion)

According to a first aspect shown in a part or all of the above embodiments, a vehicle air conditioner includes a battery-cooling blower disposed in a battery housing space and introducing air flowing inside an air-conditioning case to the battery housing space via a communication duct. The communication duct is connected to a portion located on an airflow upstream side of an inside blower in the air-conditioning case.

According to a second aspect, the vehicle air conditioner includes a cooling heat exchanger that cools air flowing inside the air-conditioning case. The cooling heat exchanger is disposed on an airflow upstream side of the inside blower. The communication duct is connected to a portion located on the airflow downstream side of the cooling heat exchanger in the air-conditioning case and on the airflow upstream side of the inside blower in the air conditioning case.

This connection of the communication duct between the cooling heat exchanger and the inside blower in the air-conditioning case allows introduction of cold air cooled by the cooling heat exchanger into the battery housing space by using the battery-cooling blower. Accordingly, the battery can be sufficiently cooled by cold air cooled by the cooling heat exchanger.

According to a third aspect, the vehicle air conditioner includes a battery-cooling blower disposed on an airflow downstream side of the battery in the battery housing space. This configuration prevents a temperature rise of the air supplied to the battery by the heat generated during operation of the battery-cooling blower, and therefore efficiently cools the battery.

According to a fourth aspect, the vehicle air conditioner includes an outside air path through which air outside the interior of the vehicle flows, and an inside air path through which air in the interior of the vehicle flows are defined inside the air-conditioning case. The communication duct is connected to a portion that forms the outside air path in the air-conditioning case such that the air outside the interior of the vehicle is introduced into the battery housing space.

This configuration introduces the air outside the interior of the vehicle, which air is likely to have lower humidity than that of the air in the interior of the vehicle, into the battery housing space. Accordingly, dew condensation in the battery decreases during cooling of the battery. Moreover, in the winter season, the air outside the interior of the vehicle, which air has a temperature lower than that of the air in the interior of the vehicle, is introduced into the battery housing space. Accordingly, efficient cooling for the battery is achievable.

According to a fifth aspect, the vehicle air conditioner includes a switching mechanism that switches between an allowing state where air circulation between the inside of the air-conditioning case and the battery housing space is allowed, and a shut-off state where air circulation between the inside of the air-conditioning case and the battery housing space is blocked. The switching mechanism is configured to switch to the allowing state during operation of the battery-cooling blower, and to the shut-off state during stop of the battery-cooling blower.

This configuration prevents airflow from the battery housing space to the inside of the air-conditioning case without cooling stop of the battery in accordance with stop of the battery-cooling blower (i.e., during only air conditioning of the interior of the vehicle). Accordingly, deterioration of air-conditioning performance in the interior of the vehicle is prevented when only air conditioning is performed in the interior of the vehicle.

**Claims**

1. A vehicle air conditioner configured to supply air to a passenger compartment and a battery housing space (52a) that houses a battery (51), the vehicle air conditioner comprising:

   an air-conditioning case (12) that defines therein an air path (13, 13A, 13B);
   an inside blower (18) that generates airflow toward the passenger compartment; and
   a communication duct (30) through which an inside of the air-conditioning case and the battery housing space communicate, wherein
   a battery-cooling blower (56) that guides air flowing inside the air-conditioning case to the battery housing space via the communication duct is disposed in the battery housing space, and
   the communication duct is connected to a portion of the air-conditioning case located upstream of the inside blower with respect to the airflow.

2. The vehicle air conditioner according to claim 1, further comprising
   a cooling heat exchanger (16) that cools air flowing inside the air-conditioning case, wherein
   the cooling heat exchanger is located upstream of the inside blower with respect to the airflow, and
   the communication duct is connected to a portion of the air-conditioning case located downstream of the cooling heat exchanger and upstream of the inside blower with respect to the airflow.

3. The vehicle air conditioner according to claim 1 or 2, wherein
   the battery-cooling blower is located downstream of the battery with respect to airflow in the battery housing space.

4. The vehicle air conditioner according to any one of claims 1 to 3, wherein
   the air-conditioning case defines therein

   an outside air path (13B) through which outside air outside the passenger compartment flows, and
   an inside air path (13A) through which inside air in the passenger compartment flows, and

   the communication duct is connected to a portion (121B) of the air-conditioning case that defines the outside air path such that the outside air outside the passenger compartment is drawn into the battery housing space.

5. The vehicle air conditioner according to any one of claims 1 to 4, further comprising
   a switching mechanism (60) that switches between

   an allowing state where air circulation between the inside of the air-conditioning case and the battery housing space is allowed, and
   a shut-off state where air circulation between the inside of the air-conditioning case and the battery housing space is stopped, wherein

   the switching mechanism is configured to switch to the allowing state during operation of the battery-cooling blower, and to the shut-off state during stop of the battery-cooling blower.

FIG. 1

# FIG. 2

```
        ┌─────────────────────┐
        │       START         │
        └─────────────────────┘
                   │
        ┌─────────────────────┐
        │    READ SIGNALS     │───S10
        └─────────────────────┘
                   │
                 ╱   ╲  ───S20
               ╱       ╲
             ╱  BATTERY  ╲  NO
            ╱ TEMPERATURE ╲──────────────────────┐
            ╲ ≤ ACCEPTABLE ╱                      │
             ╲UPPER LIMIT ╱                        │
              ╲TEMPERATURE?╱                       │
                 ╲  ╱                              │
                  YES  ───S30                      │  ───S40
        ┌─────────────────────┐      ┌──────────────────────────────┐
        │INSIDE AIR-CONDITIONING│      │     BATTERY-COOLING MODE      │
        │        MODE          │      │                              │
        │·INSIDE BLOWER:       │      │·INSIDE BLOWER: IN OPERATION   │
        │         IN OPERATION │      │·BATTERY-COOLING BLOWER:       │
        │·BATTERY-COOLING      │      │             IN OPERATION      │
        │  BLOWER: STOP        │      │                              │
        └─────────────────────┘      └──────────────────────────────┘
                   │                              │
                   │◄─────────────────────────────┘
        ┌─────────────────────┐
        │       RETURN         │
        └─────────────────────┘
```

14

# FIG. 3

# FIG. 4

# FIG. 5

# FIG. 6

FIG. 7

# FIG. 8

```
                    ┌──────────────┐
                    │    START     │
                    └──────┬───────┘
                           │
              ┌────────────┴────────────┐
              │     READ SIGNALS        │──── S10
              └────────────┬────────────┘
                           │
                           │        S20
                      ╱────┴────╲
                    ╱             ╲
                  ╱  BATTERY       ╲        NO
                 ╱  TEMPERATURE     ╲──────────────┐
                 ╲ ≤ ACCEPTABLE      ╱             │
                  ╲ UPPER LIMIT     ╱              │
                   ╲ TEMPERATURE?  ╱               │
                     ╲────┬────╱                   │
                       YES │     S30A              │    S40A
   ┌───────────────────────┴──────────┐   ┌────────┴──────────────────────────┐
   │ INSIDE AIR-CONDITIONING MODE      │   │ BATTERY-COOLING MODE              │
   │ ·INSIDE BLOWER: IN OPERATION      │   │ ·INSIDE BLOWER: IN OPERATION      │
   │ ·BATTERY-COOLING BLOWER: STOP     │   │ ·BATTERY-COOLING BLOWER: IN       │
   │ ·OPENING-CLOSING DOOR:            │   │   OPERATION                       │
   │            CLOSED POSITION        │   │ ·OPENING-CLOSING DOOR: OPEN       │
   │                                   │   │   POSITION                        │
   └─────────────────┬─────────────────┘   └────────────┬──────────────────────┘
                     │◄─────────────────────────────────┘
                     │
              ┌──────┴───────┐
              │    RETURN     │
              └──────────────┘
```

# FIG. 9

# FIG. 10

## INTERNATIONAL SEARCH REPORT

| | International application No. |
|---|---|
| | PCT/JP2017/047108 |

### A. CLASSIFICATION OF SUBJECT MATTER

Int.Cl. B60H1/00(2006.01)i, B60H1/32(2006.01)i, B60K1/04(2006.01)i, B60K11/06(2006.01)i

According to International Patent Classification (IPC) or to both national classification and IPC

### B. FIELDS SEARCHED

Minimum documentation searched (classification system followed by classification symbols)
Int.Cl. B60H1/00, B60H1/32, B60K1/04, B60K11/06

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2008-68740 A (TOYOTA MOTOR CORP.) 27 March 2008, paragraphs [0034]-[0043], fig. 1-3 (Family: none) | 1-3 |
| Y | | 4-5 |
| X | JP 2006-143183 A (DENSO CORP.) 08 June 2006, paragraphs [0040]-[0054], fig. 1 & US 2006/0080986 A1, paragraphs [0069]-[0086], fig. 1 & DE 102005049200 A | 1 |
| Y | | 4-5 |
| Y | JP 2015-3617 A (MITSUBISHI MOTORS CORP.) 08 January 2015, paragraphs [0018]-[0022], fig. 2-4 (Family: none) | 5 |
| A | JP 2013-544700 A (VALEO AUTOMOTIVE AIR CONDITIONNING HUBEI CO., LTD.) 19 December 2013, entire text, all drawings & WO 2012/055367 A1 & CN 102452293 A | 1-5 |
| A | JP 48-27391 Y1 (TOYOTA JIDOSYA KOGYO KABUSHIKI KAISHA) 13 August 1973, entire text, all drawings (Family: none) | 1-5 |

☐ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 March 2018 (01.03.2018) | 13 March 2018 (13.03.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 578 396 A1**

REFERENCES CITED IN THE DESCRIPTION

**Patent documents cited in the description**

- JP 2017017723 A
- JP 2008222041 A